# EUROPEAN PATENT APPLICATION

(11) **EP 4 598 052 A2**
(43) Date of publication of application: **06.08.2025**
(21) Application number: 25154703.0
(22) Date of filing: 29.01.2025
(51) Int. Cl.: H04R 1/10, H02J 7/00, H04R 25/02

(54) **CHARGER DEVICE FOR HEARING DEVICES**

(30) Priority: 05.02.2024 EP 24155704
(71) Applicant: Oticon A/S, 2765 Smørum (DK)
(72) Inventor: CHRISTENSEN, Lars Steen, DK-2765 Smørum (DK); RIEMER, Lars, DK-2765 Smørum (DK)
(74) Representative: Demant

(57) **Abstract**

The present disclosure relates to a charger (10) for one or more hearing devices. The charger (10) comprises a removable insert (12) that is configured to receive the hearing device. The insert (12) defines a cavity (16) shaped complimentary to at least part of the hearing device housing. The insert (12) is releasably fastened to the charger housing (20) using a snap fit solution (14, 18).

## Description

The present disclosure relates to a charger device configured to charge one or more hearing devices. More particularly, the disclosure relates to a charger device for wireless or wired charging of hearing devices, such as a single hearing device or a set of hearing device. The hearing device may be a hearing aid or an earbud/hearable or the like ear level device.

When charging a device configured to be positioned at an ear of a user, such as a hearing aid or a hearing device or an earbud, either via a wire or wirelessly, there is a need for having a place to locate the device, such as an earbud, such as a hearing aid, such as set of hearing aids, while charging. This may be achieved in a charger device as disclosed herein.

Further, when charging small devices such as hearing devices, hearing aids, earbuds, uses would benefit from receiving some kind of feedback that the device or devices are positioned correctly, i.e. the device or set of devices are in a position where they can receive power to charge/recharge an energy storage in the housing of such a device. This could be wirelessly or wired charging as mentioned above.

Hearing aids generally is available in a range of different styles, often termed Behind-the-ear, Receiver-in-the-ear, In-the-ear. All these have different form factors, and even different sizes within the same style. This could lead to the need for specifically shaped charger/storage devices, however, providing a specialized/customized charger for a specific hearing deice/hearing aid could be expensive and/or cumbersome.

Earbuds are generally shaped to be at least partially located in the ear canal of a user/wearer with a part being shaped/formed to face the environment of the user. When a user places a device in a charger in order to charge it, the user could accidentally place the device wrongly so that the device does not receive any charge.

Therefore, there is a need to provide a solution that addresses at least some of the above-mentioned problems. The present disclosure provides at least an alternative to the prior art.

Document US 2020/245079 discloses a universal charging and drying station includes a main unit and a hearing aid charger.

Document US 2020/275184 discloses a charger for an earbud.

Document DE 29 718104 discloses a charger for a hearing aid.

Document US 2023/292030 discloses charging kit for charging one or more rechargeable hearing devices being configured to be worn by a user. The charging kit comprises a base charger being configured to receive a first model specific insert, the base charger comprising a transmitter charging element, where the first model specific insert is adapted to removably receive at least a first model specific hearing device of the one or more hearing devices, the first model specific hearing device comprising a first receiver charging element. The transmitter charging element is arranged in the base charger on an adjustable support.

### SUMMARY

The present disclosure related to a charger device for (re)charging a hearing device. The charger device may be powered by a mains connection. The charger device may comprise a battery configured to provide charge power to the hearing device when no mains connection is present or available, such as while the user is travelling or the like. The internal battery may then be charged when the charger is connected to an external power supply, such as a mains power supply. The mains power may be provided from e.g. a 12/24V car supply or a 110/220 V wall socket or the like, or a 5V USB connection to a computer or suitable power supply. The charger device may comprise one or more visual indicators, such as LED lights and/or a graphic display. The visual indicators may be used to communicate information such as "device present", "device being charged", "device partial charge status", "device fully charged". The charger device may comprise a data interface configured to communicate with a server device for providing e.g. software/setting update to the hearing device, such as firmware updates etc. or may be configured to collect data from a hearing device, such as use data, status data, crash data etc. Such collected data may e.g. be stored in the charger device until the device is examined/read at a hearing health care professional or service personnel, or, may be communicated from the charger device via a communications interface either directly via e.g. WIFI or via a connection though a smartphone, to e.g. a server or the like. In such cases, the charger device may include a wireless interface, such as WiFi and/or Bluetooth or another suitable communication interface.

The present disclosure relates to a charging device configured to receive a hearing device. Such a hearing device may have a hearing device housing having a side surface, or at least an outer surface, wherein the hearing device being an ear level device, such as hearing aid or an earbud. The charging device may include a charger housing having a reception part configured to receive at least part of the hearing device housing, such as conforming to at least part of the hearing device housing such as at least party conforming to at least part of the outer surface of the hearing device housing. The charging device may be configured so that the reception part is detachable from the charger housing. This may be arranged so that the end user is not able to easily detach the insert from the housing. The charging device may be configured so that the reception part defining a cavity shaped complementary to at least part of the hearing device housing. By complementary is meant that the shape of the cavity matches the shape of the device to be charged. The charging device may be configured so that the reception part having a lower part which is received in the charger housing and releasably fastened thereto via a snap part. The charging device may be configured so that the reception part having a lower part which is received in the charger housing and releasably fastened thereto via a snap part. The fastening is advantageously inside the housing, so that an upper part of the insert is received at an opening of the charger housing and the snap part is positioned inside the housing, away from the opening.

The charging device may be configured so that when the reception part is mounted in the charger housing, a top part of the reception part is substantially flush with an outer surface of the charger housing.

The charging device may be configured so that the snap part comprises a snap ramp.

The charging device may be configured so that the charger housing comprises snap ribs.

The charging device may be configured so that the reception part is configured to slide into a snap locking in a direction substantially perpendicular to an insert direction of a longitudinal axis of the cavity.

The charging device may be configured so that the reception part is configured to move towards the surface of the charger housing after sliding towards the snap locking.

The charging device may be configured so that the charger comprises a charge supply configured to provide a charge current to the hearing device, either via contact pads or wirelessly.

The charging device may be configured so that the charger housing and/or the reception part comprises one or more magnets configured to provide a retention force between the hearing device and the reception part and/or charger housing.

The charging device may be configured so that the reception part comprises a window area configured to allow light from a light source in the charger device to shine through.

The charging device may be configured so as to further comprising a non-visible light source configured to provide a signal directed at a specific area of a hearing device inserted into the reception part during charging, and wherein the hearing device comprises illuminous material which illuminates when exposed to the non-visible light.

A hearing aid may be adapted to provide a frequency dependent gain and/or a level dependent compression and/or a transposition (with or without frequency compression) of one or more frequency ranges to one or more other frequency ranges, e.g. to compensate for a hearing impairment of a user. The hearing aid may comprise a signal processor for enhancing the input signals and providing a processed output signal. The hearing aid may comprise an output unit for providing a stimulus perceived by the user as an acoustic signal based on a processed electric signal. The output unit may be a vibrator of a bone conducting hearing aid. The output unit may comprise an output transducer. The output transducer may comprise a receiver (loudspeaker) for providing the stimulus as an acoustic signal to the user (e.g. in an acoustic (air conduction based) hearing aid). The output transducer may comprise a vibrator for providing the stimulus as mechanical vibration of a skull bone to the user (e.g. in a bone-attached or bone-anchored hearing aid). The output unit may (additionally or alternatively) comprise a (e.g. wireless) transmitter for transmitting sound picked up-by the hearing aid to another device, e.g. a far-end communication partner (e.g. via a network, e.g. in a telephone mode of operation, or in a headset configuration).

The hearing aid may comprise an input unit for providing an electric input signal representing sound. The input unit may comprise an input transducer, e.g. a microphone, for converting an input sound to an electric input signal. The input unit may comprise a wireless receiver for receiving a wireless signal comprising or representing sound and for providing an electric input signal representing said sound.

The wireless receiver and/or transmitter may e.g. be configured to receive and/or transmit an electromagnetic signal in the radio frequency range (3 kHz to 300 GHz). The wireless receiver and/or transmitter may e.g. be configured to receive and/or transmit an electromagnetic signal in a frequency range of light (e.g. infrared light 300 GHz to 430 THz, or visible light, e.g. 430 THz to 770 THz).

The hearing aid may comprise a directional microphone system adapted to spatially filter sounds from the environment, and thereby enhance a target acoustic source among a multitude of acoustic sources in the local environment of the user wearing the hearing aid. The directional system may be adapted to detect (such as adaptively detect) from which direction a particular part of the microphone signal originates. This can be achieved in various different ways as e.g. described in the prior art. In hearing aids, a microphone array beamformer is often used for spatially attenuating background noise sources. The beamformer may comprise a linear constraint minimum variance (LCMV) beamformer. Many beamformer variants can be found in literature. The minimum variance distortionless response (MVDR) beamformer is widely used in microphone array signal processing. Ideally the MVDR beamformer keeps the signals from the target direction (also referred to as the look direction) unchanged, while attenuating sound signals from other directions maximally. The generalized sidelobe canceller (GSC) structure is an equivalent representation of the MVDR beamformer offering computational and numerical advantages over a direct implementation in its original form.

The hearing aid may comprise antenna and transceiver circuitry allowing a wireless link to an entertainment device (e.g. a TV-set), a communication device (e.g. a telephone), a wireless microphone, a separate (external) processing device, or another hearing aid, etc. The hearing aid may thus be configured to wirelessly receive a direct electric input signal from another device. Likewise, the hearing aid may be configured to wirelessly transmit a direct electric output signal to another device. The direct electric input or output signal may represent or comprise an audio signal and/or a control signal and/or an information signal.

In general, a wireless link established by antenna and transceiver circuitry of the hearing aid can be of any type. The wireless link may be a link based on near-field communication, e.g. an inductive link based on an inductive coupling between antenna coils of transmitter and receiver parts. The wireless link may be based on far-field, electromagnetic radiation. Preferably, frequencies used to establish a communication link between the hearing aid and the other device is below 70 GHz, e.g. located in a range from 50 MHz to 70 GHz, e.g. above 300 MHz, e.g. in an ISM range above 300 MHz, e.g. in the 900 MHz range or in the 2.4 GHz range or in the 5.8 GHz range or in the 60 GHz range (ISM=Industrial, Scientific and Medical, such standardized ranges being e.g. defined by the International Telecommunication Union, ITU). The wireless link may be based on a standardized or proprietary technology. The wireless link may be based on Bluetooth technology (e.g. Bluetooth Low-Energy technology, e.g. LE audio), or Ultra WideBand (UWB) technology.

The hearing aid may be constituted by or form part of a portable (i.e. configured to be wearable) device, e.g. a device comprising a local energy source, e.g. a battery, e.g. a rechargeable battery. The hearing aid may e.g. be a low weight, easily wearable, device, e.g. having a total weight less than 100 g, such as less than 20 g, such as less than 5 g.

The hearing aid may comprise a "forward" (or 'signal') path for processing an audio signal between an input and an output of the hearing aid. A signal processor may be located in the forward path. The signal processor may be adapted to provide a frequency dependent gain according to a user's particular needs (e.g. hearing impairment). The hearing aid may comprise an 'analysis' path comprising functional components for analyzing signals and/or controlling processing of the forward path. Some or all signal processing of the analysis path and/or the forward path may be conducted in the frequency domain, in which case the hearing aid comprises appropriate analysis and synthesis filter banks. Some or all signal processing of the analysis path and/or the forward path may be conducted in the time domain.

An analogue electric signal representing an acoustic signal may be converted to a digital audio signal in an analogue-to-digital (AD) conversion process, where the analogue signal is sampled with a predefined sampling frequency or rate fₛ, fₛ being e.g. in the range from 8 kHz to 48 kHz (adapted to the particular needs of the application) to provide digital samples xₙ (or x[n]) at discrete points in time tₙ (or n), each audio sample representing the value of the acoustic signal at tₙ by a predefined number N_{b} of bits, N_{b} being e.g. in the range from 1 to 48 bits, e.g. 24 bits. Each audio sample is hence quantized using N_{b} bits (resulting in 2^{Nb} different possible values of the audio sample). A digital sample x has a length in time of 1/fₛ, e.g. 50 µs, for *fₛ* = 20 kHz. A number of audio samples may be arranged in a time frame. A time frame may comprise 64 or 128 audio data samples. Other frame lengths may be used depending on the practical application.

The hearing aid may comprise an analogue-to-digital (AD) converter to digitize an analogue input (e.g. from an input transducer, such as a microphone) with a predefined sampling rate, e.g. 20 kHz. The hearing aids may comprise a digital-to-analogue (DA) converter to convert a digital signal to an analogue output signal, e.g. for being presented to a user via an output transducer.

The hearing aid may be configured to operate in different modes, e.g. a normal mode and one or more specific modes, e.g. selectable by a user, or automatically selectable. A mode of operation may be optimized to a specific acoustic situation or environment, e.g. a communication mode, such as a telephone mode. A mode of operation may include a low-power mode, where functionality of the hearing aid is reduced (e.g. to save power), e.g. to disable wireless communication, and/or to disable specific features of the hearing aid.

The hearing aid may comprise a number of detectors configured to provide status signals relating to a current physical environment of the hearing aid (e.g. the current acoustic environment), and/or to a current state of the user wearing the hearing aid, and/or to a current state or mode of operation of the hearing aid. Alternatively or additionally, one or more detectors may form part of an *external* device in communication (e.g. wirelessly) with the hearing aid. An external device may e.g. comprise another hearing aid, a remote control, and audio delivery device, a telephone (e.g. a smartphone), an external sensor, etc.

The hearing aid may comprise a movement detector, e.g. an acceleration sensor. The movement detector may be configured to detect movement of the user's facial muscles and/or bones, e.g. due to speech or chewing (e.g. jaw movement) and to provide a detector signal indicative thereof. The hearing aid may be configured to enter certain modes based on signal from the moment detector.

The hearing aid may comprise a hearing instrument, e.g. a hearing instrument adapted for being located at the ear or fully or partially in the ear canal of a user, e.g. a headset, an earphone, an ear protection device or a combination thereof. A hearing system may comprise a speakerphone (comprising a number of input transducers (e.g. a microphone array) and a number of output transducers, e.g. one or more loudspeakers, and one or more audio (and possibly video) transmitters e.g. for use in an audio conference situation), e.g. comprising a beamformer filtering unit, e.g. providing multiple beamforming capabilities.

**In** the present context, a hearing aid, e.g. a hearing instrument, refers to a device, which is adapted to improve, augment and/or protect the hearing capability of a user by receiving acoustic signals from the user's surroundings, generating corresponding audio signals, possibly modifying the audio signals and providing the possibly modified audio signals as audible signals to at least one of the user's ears. Such audible signals may e.g. be provided in the form of acoustic signals radiated into the user's outer ears and/or acoustic signals transferred as mechanical vibrations to the user's inner ears through the bone structure of the user's head and/or through parts of the middle ear.

The hearing aid may be configured to be worn in any known way, e.g. as a unit arranged behind the ear with a tube leading radiated acoustic signals into the ear canal or with an output transducer, e.g. a loudspeaker, arranged close to or in the ear canal, as a unit entirely or partly arranged in the pinna and/or in the ear canal, as a unit, e.g. a vibrator, attached to a fixture implanted into the skull bone, etc. The hearing aid may comprise a single unit or several units communicating (e.g. acoustically, electrically or optically) with each other. The loudspeaker may be arranged in a housing together with other components of the hearing aid, or may be an external unit in itself (possibly in combination with a flexible guiding element, e.g. a dome-like element).

A hearing aid may be adapted to a particular user's needs, e.g. a hearing impairment. A configurable signal processing circuit of the hearing aid may be adapted to apply a frequency and level dependent compressive amplification of an input signal. A customized frequency and level dependent gain (amplification or compression) may be determined in a fitting process by a fitting system based on a user's hearing data, e.g. an audiogram, using a fitting rationale (e.g. adapted to speech). The frequency and level dependent gain may e.g. be embodied in processing parameters, e.g. uploaded to the hearing aid via an interface to a programming device (fitting system), and used by a processing algorithm executed by the configurable signal processing circuit of the hearing aid.

A 'hearing system' refers to a system comprising one or two hearing aids, and a 'binaural hearing system' refers to a system comprising two hearing aids and being adapted to cooperatively provide audible signals to both of the user's ears. Hearing systems or binaural hearing systems may further comprise one or more 'auxiliary devices', which communicate with the hearing aid(s) and affect and/or benefit from the function of the hearing aid(s). Such auxiliary devices may include at least one of a remote control, a remote microphone, an audio gateway device, an entertainment device, e.g. a music player, a wireless communication device, e.g. a mobile phone (such as a smartphone) or a tablet or another device, e.g. comprising a graphical interface. Hearing aids, hearing systems or binaural hearing systems may e.g. be used for compensating for a hearing-impaired person's loss of hearing capability, augmenting or protecting a normal-hearing person's hearing capability and/or conveying electronic audio signals to a person. Hearing aids or hearing systems may e.g. form part of or interact with public-address systems, active ear protection systems, handsfree telephone systems, car audio systems, entertainment (e.g. TV, music playing or karaoke) systems, teleconferencing systems, classroom amplification systems, etc.

The invention is set out in the appended set of claims.

### BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:
FIG. 1 schematically shows a hearing aid;
FIG. 2 schematically shows a charger and insert according to the present disclosure;
FIG. 3 schematically shows steps of inserting an inset into a charger; and
FIG 4 schematically shows a charger with lights in the charging receptacle.

The figures are schematic and simplified for clarity, and they just show details which are essential to the understanding of the disclosure, while other details are left out. Throughout, the same reference signs are used for identical or corresponding parts.

Further scope of applicability of the present disclosure will become apparent from the detailed description given hereinafter. However, it should be understood that the detailed description and specific examples, while indicating preferred embodiments of the disclosure, are given by way of illustration only. Other embodiments may become apparent to those skilled in the art from the following detailed description.

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include micro-electronic-mechanical systems (MEMS), integrated circuits (e.g. application specific), microprocessors, microcontrollers, digital signal processors (DSPs), field programmable gate arrays (FPGAs), programmable logic devices (PLDs), gated logic, discrete hardware circuits, printed circuit boards (PCB) (e.g. flexible PCBs), and other suitable hardware configured to perform the various functionality described throughout this disclosure, e.g. sensors, e.g. for sensing and/or registering physical properties of the environment, the device, the user, etc. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

The present application relates to the field of hearing aids and specifically in the field of chargers for hearing aids.

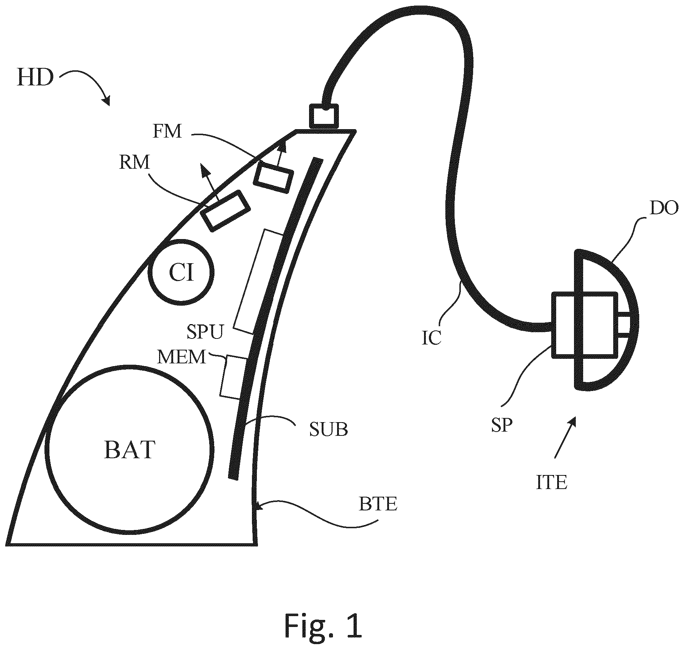

Fig. 1, schematically illustrates a hearing device HD, where the hearing device is shaped as a hearing aid of the behind-the-ear hearing aid. As disclosed herein, the hearing devie may be provided in other form-factors and without hearing loss compensation, i.e. as a earphone e.g. for music and/or phone conversation as a wireless headset. The hearing device HD comprises an interconnection member IC connecting a behind-the-ear housing BTE with an in-the-ear housing ITE. Two microphones constitute an input system for the hearing device, which are connected to a processor SPU and a memory MEM arranged in connection with a substrate SUB. A battery BAT powers the hearing device. Here the battery BAT is a secondary battery, i.e. rechargeable.

The hearing device HD comprises a charge interface CI configured to receive power from an external source and provide this as charging power to the battery during a recharging process. The charge interface CI may be a wired interface and/or a wireless interface. A wired part of such a charge interface may include one or more, such as two, pins which are configured to connect to corresponding pads in a charger device. A wireless part of a charge interface may include one or more coils configured to receive a wireless charge field emitted by a charger device having a charge coil. The charge interface CI may be connected through a converter in order to charge the battery BAT.

The hearing device HD may comprise an RF antenna in connection with a suitable wireless interface, such as a radio configured to communicate using a data protocol, such as Bluetooth/Bluetooth Low Energy or the like. The hearing device HD may comprise an inductive communication interface with a coil, wherein the inductive communication interface is configured to communicate with a hearing device to be placed at the contralateral ear of a user. The inductive communication interface may be configured to communicate with other devices than another hearing device. The coil for the inductive communication interface may be the same coil as the charger interface coil used to pick up wireless charge energy.

Insert assemblies are used to be fixated by screws which is time consuming in production. We have also seen issues with cracked and broken screw towers. So, an easier way of mounting and fixate the inserts are good for both production and reliability. Also moulding of this solution is simpler than traditional snap solutions.

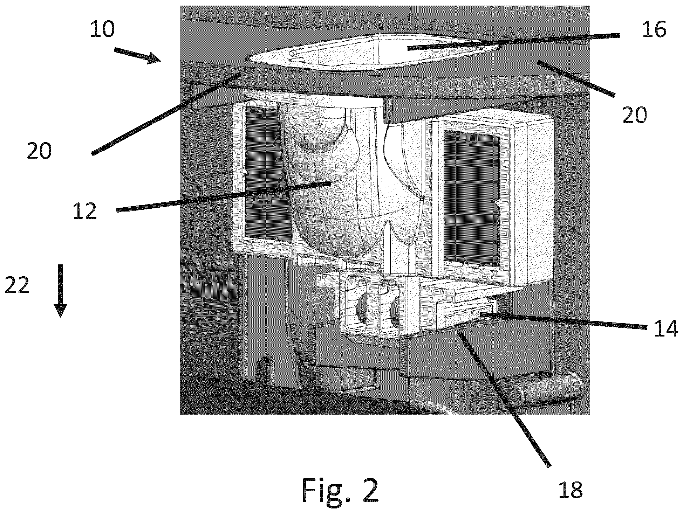

Fig. 2 schematically illustrates a charger device 10 having a charger housing 20. In the charger housing an insert 12 is provided. The insert 12 is a removable or releasable reception part. The insert or reception part is configured to receive a hearing aid/hearing device, such as HD illustrated in Fig. 1. There may be provided a set of differently shaped reception parts 12 to accommodate a number of different type/shapes of hearing aids. The insert/reception part may be chosen during production of the charger device.

The hearing device has a hearing device housing having a side surface, or number of side surfaces which are connected, at least the hearing aid housing defines an outer geometry. The hearing device is an ear level device, such as hearing aid or an earbud.

The charger housing has an opening configured to receive the reception part 12. The receiver part 12 is preferably mounted in the charger housing so that a user is not able to remove it easily. The reception part is selectable during production, meaning that it would be possible to define a number of differently shaped reception parts to accommodate differently shaped hearing aids, that a so that the base part, being the charger housing and associated electronics is provided for a number of different hearing aids while only the reception part is the varying part, thereby reducing production cost. Further, even if different reception parts and different housing needs to be products to accommodate different style/type/shapes of hearing devices are needed, the reception part and charger housing according to the present disclosure is advantageous in that the reception part is fastened to the housing in an efficient manner which reduce the risk of the insertion part falling out while the intended user is removing a hearing device resting in the charger.

The reception part 12 defines a cavity shaped complementary to at least part of the hearing device housing, thereby providing an at least somewhat tight fit so that the hearing device does not fall out during charging, and possibly a well-defined orientation of the hearing device relative to the charger maintained, such as an orientation relative to a wireless power source or contact pads for contact charging. The reception part has a lower part which is received in the charger housing and releasably fastened thereto via a snap part, as illustrated in Fig. 2.

This is a snap fit solution. The snaps have been designed and implemented in an advantageous manner. Two snap ramps 14 are arranged at opposite sides of the reception part 12. The snap ramps 14 each engage a corresponding snap rib 18 during insertion. The snap ramps 14 are slightly inclined so that when pushed into place, the reception part 12 is lifted upwards towards the opening in the charger housing. The snaps, on the reception part 12, include 2 ribs which are being pressed away from each other during insertion, by the ramp shaped geometry on the insert, and when the insert is fully inserted (upwards) these snap arms are moving back into original position below the insert, and thereby lock the position of the insert. The ramps will prevent the insert from moving down when the ribs are in relaxed position.

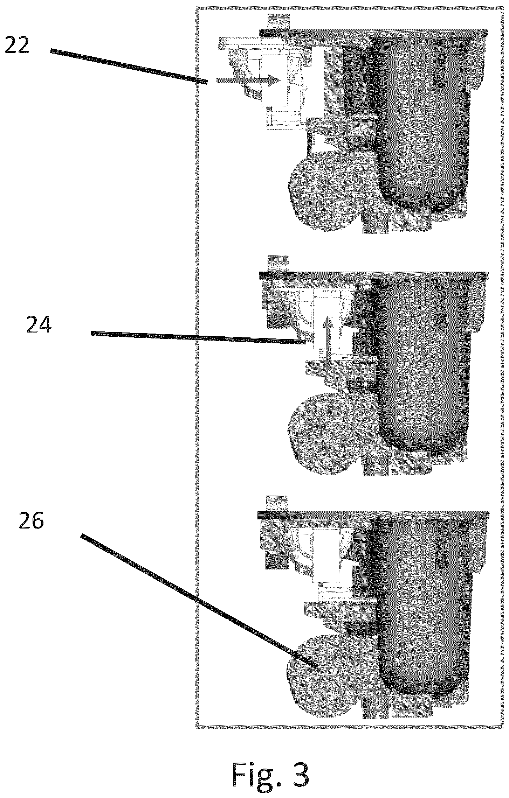

Fig. 3 schematically illustrates three steps of inserting a reception part 12 into a charger housing. At the top figure, the insert 12 is inserted in the direction of the arrow 22. In the middle figure, the insert moves upwards in the direction of the arrow 24. At the bottom illustration, the insert in in place in the charger housing. The charger includes a replaceable battery 26 for charging the hearing aid or hearing aids. The charger may include a power inlet, e.g. in the form of a USB-type inlet, which charges the internal battery of the charger.

Preferably, both the charger housing and the insert/reception part are made from plastics material. The ribs are easy to mould compared to traditional snap solutions which require angled inserts or angled lifters in the moulding tool.

The assembly procedure is shown in Figs. 3-5. The inserts are being slide into position and then pressed up.

When charging re-chargeable hearing device in a charger, the user might want to see the hearing device charge status. Adding light sources, such as LEDs, to the hearing device requires increase in cost, space and power in a system that is constrained on all parameters. Adding lights sources in the charger device is a better solution, but risks confusing the user about "is this the charger state, or the hearing device state, that the LEDs show?"

By using ultraviolet LEDs in the charger device, which are then configured to illuminating fluorescent dots on the hearing device shell, both these problems are solved. The charger can light up the dots on the hearing device. Further, hearing device light guides are avoided.

It is further possible to add the following:
- Multiple coloured dots on the hearing device, illuminated by multiple UV LEDs.
- Specially shaped fluorescent marks on the hearing device, such as square, bar, letter, which is simpler and cheaper obtained using fluorescent marks than hearing device light sources with specifically shaped lightguides.

For a typical hearing aid end-user, dexterity and feeling in the fingers is limited, as most hearing aid users a elderly and might have disabilities in addition to a hearing loss. This makes inserting a hearing aid correctly into a charger, a challenge. Anything that could help inserting the hearing aid into the charger would be welcome.

Additionally, the best use of the charger is with its lid closed, but this is dependent on that the user remembers to close the lid after HI insertion / removal. Personal experience shows that the user can forget to close the lid after use.

On some chargers, there are arranged coloured paint dots next to each slot (indicating Red for Right, and Blue for Left). Adding these paint dots is an extra painting step in the production process.

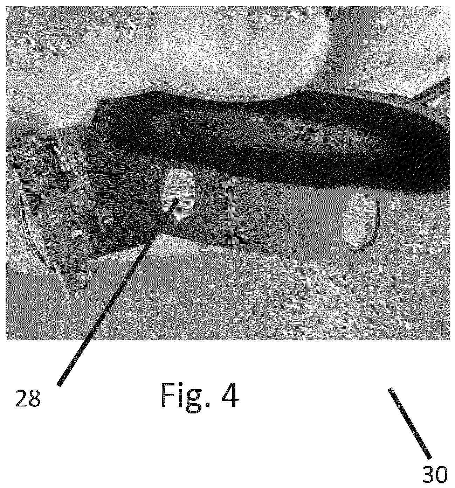

Lighted slots, as illustrated in Fig. 4, will make it easier to find the slots when inserting hearing aids in a dark bedroom in the evening. Slots will light up on charger lid opening or based on a signal from a proximity sensor if the charger does not have a lid, or in addition to a lid being left open.

Lighted slots (with hearing aids inserted) will make it easier to find the aids and the charger in a dark or low-lit bedroom in the morning.

Lighted slots will prompt the user to close the lid - like the light in a refrigerator.

Lighted slots can obviate the need for the coloured paint dots next to the slots (Right slot can light up Red, Left slot can light up Blue). Other colours could be used to indicate e.g. a faulty charging, faulty placement of the hearing aid in the charger or other faults.

Apart from not having to paint on the dots, a lighted slot is bigger and easier to see as Red or Blue indicator than a dot, especially if the user also have a seeing disability.

There are many possibilities for the use of lighted slots:
- Slot can turn off light, or change colour when HI is being inserted.
   ∘ This helps ensuring correct insertion.
- Slot can turn off light when lid is closed.
- Slot can signal when hearing aid is fully charged. This feedback will appear faster than hearing aid LED signalling as hearing aid often needs to re-boot before signalling.
- Slot can pulsate the light to draw attention to "You should close the lid".
- Slot light can give direct feedback on the charging state, as seen by the charger.

For charger devices where the user interface is one or more LEDs only, it is very hard to get more information out of the device in case of errors. Adding an extra display adds cost and complexity. Requiring a computer interface (e.g. USB) also adds cost and complexity, and also makes it hard to use for a typical end-user.

Most modern users have a smartphone with a camera and App support. By having the charger device "invisibly" output debug information to be captured by the phone camera, the big screen of the phone can be used to show more information. Additionally, from the phone the end-user can send the debug information back to the developers quickly and easily.

The app and camera could record a movie or clip of a LED, and decode the "hidden" message in the LED output, such a pattern of blinks and pauses, such as sequences and/or pauses and/or intensities. This could be done using fast changes not perceivable by the human eye. The LED output can be modulated slow enough for the camera to detect the modulation, but faster than the eye can see. And even a slightly unsteady LED output will be perceived as an error indication.

When a charger device fails and enters a Safe Mode, the "safe mode reason" is the most interesting data to know. A charger device may e.g. have 3 LEDs arranged on a row/line. In Safe Mode, they may all flash orange. A lit-up LED can be intensity controlled by Pulse Width Modulation (PWM), in where the LED is fully ON for some microseconds, then fully OFF for some microseconds. The ratio of ON time to OFF time determines the perceived LED intensity. The human eye is too "slow" to see the ON and OFF periods, but integrate to a perceived intensity.

To send a bit/information to the smart phone app, a LED can flash with two slightly different PWM rates, and modulate the PWM rate around the average (expected) rate. A smart phone camera can capture 30 frames/second, so 10 bits/second is a realistic data transfer rate. PWM modulation giving light for a frame more than average for a '1', and light for a frame less than average for a '0' would be quite robust.

A lot of extensions can be made including but not limited to:
- Coding the bits to send with NRZ or 8/10 or other coding, to get an average deviation of 0.
- Adding error correction to the messages.
- Sending data out in a "carousel" so high-priority info gets repeated more often -like in TextTV.
- Using multiple LEDs for extra bandwidth.
- Modifying the human-visible light pattern to get more ON time, or more contrast, or more bandwidth.
- Adding "helper" graphics on the camera image presented to the user, e.g. circles around where the LEDs must be.
- Doing some (or all) decoding in the app, and sending some (or all) data to Demant for extra analysis.
- Non only send debug info in case of errors, but continuously send out "interesting" info, e.g. Serial number, SW version, on-hours, remaining battery capacity, etc.

More light-hearted, the method may be used to create "Easter Eggs" where users actively want to hunt for new devices to "collect" them.

It is intended that the structural features of the devices described above, either in the detailed description and/or in the claims, may be combined with steps of the method, when appropriately substituted by a corresponding process.

As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element, but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method are not limited to the exact order stated herein, unless expressly stated otherwise.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art.

The claims are not intended to be limited to the aspects shown herein but are to be accorded the full scope consistent with the language of the claims, wherein reference to an element in the singular is not intended to mean "one and only one" unless specifically so stated, but rather "one or more." Unless specifically stated otherwise, the term "some" refers to one or more.

## Claims

1. A charging device configured to receive a hearing device, wherein the hearing device has a hearing device housing having a side surface, the hearing device being an ear level device, such as hearing aid or an earbud, the charging device comprising:
a charger housing having a reception part configured to receive at least part of the hearing device housing, wherein the reception part is detachable from the charger housing, the reception part defining a cavity shaped complementary to at least part of the hearing device housing, the reception part having a lower part which is received in the charger housing and releasably fastened thereto via a snap part.

2. The charging device according to claim 1, wherein when the reception part is mounted in the charger housing, a top part of the reception part is substantially flush with an outer surface of the charger housing.

3. The charging device according to claim 1 or 2 wherein the snap part comprises a snap ramp.

4. The charging device according to any one of claims 1-3, wherein the charger housing comprises snap ribs.

5. The charging device according to any one of claims 1-4, wherein the reception part is configured to slide into a snap locking in a direction substantially perpendicular to an insert direction of a longitudinal axis of the cavity.

6. The charging device according to claim 5, wherein the reception part is configured to move towards the surface of the charger housing after sliding towards the snap locking.

7. The charging device according to any one of claims 1-6, wherein the charger comprises a charge supply configured to provide a charge current to the hearing device, either via contact pads or wirelessly.

8. The charging device according to any one of claims 1-7, wherein the charger housing and/or the reception part comprises one or more magnets configured to provide a retention force between the hearing device and the reception part and/or charger housing.

9. The charging device according to any one of claims 1-8, wherein the reception part comprises a window area configured to allow light from a light source in the charger device to shine through.

10. The charging device according to any one of claims 1-9, further comprising a non-visible light source configured to provide a signal directed at a specific area of a hearing device inserted into the reception part during charging, and wherein the hearing device comprises illuminous material which illuminates when exposed to the non-visible light.

11. The charging device according to any one of claims 1-10, further comprising a replaceable battery.

12. The charging device according to any one of claims 1-11, further comprising a lid and a sensor, and wherein the charging device is configured to charge a hearing aid only when the sensor indicates that the lid is closed.
